# EUROPEAN PATENT SPECIFICATION

(11) **EP 4 639 307 B1**
(45) Date of publication and mention of the grant of the patent: **02.12.2026**
(21) Application number: 23836756.9
(22) Date of filing: 19.12.2023
(51) Int. Cl.: G05D 1/695, G05D 1/698, G05D 105/28, G05D 107/70, G05D 109/10

(54) **METHOD AND SYSTEM FOR MOVING AUTOMATED VEHICLES OF AN AUTOMATED STORAGE SYSTEM**
VERFAHREN UND SYSTEM ZUM BEWEGEN VON AUTOMATISIERTEN FAHRZEUGEN EINES AUTOMATISIERTEN LAGERSYSTEMS
PROCÉDÉ ET SYSTÈME DE DÉPLACEMENT DE VÉHICULES AUTOMATISÉS D'UN SYSTÈME DE STOCKAGE AUTOMATISÉ

(30) Priority: 21.12.2022 NO 20221383
(43) Date of publication of application: 29.10.2025
(73) Proprietor: AutoStore Technology AS, 5578 Nedre Vats (NO)
(72) Inventor: STRØMME, Erik, 1388 BORGEN (NO)
(74) Representative: Kilburn & Strode LLP
(86) International application number: PCT/EP2023/086727
(87) International publication number: WO 2024/133324

(56) References cited:
- WO-A1-2021/209337
- CN-A- 113 467 449
- US-A1- 2022 388 773

## Description

### FIELD OF THE INVENTION

The present invention relates to an automated storage and retrieval system for storage and retrieval of storage containers handled by automated vehicles, and more specifically to a method, system, and computer program for controlling movements of a plurality of automated vehicles to move as a group.

### BACKGROUND AND PRIOR ART

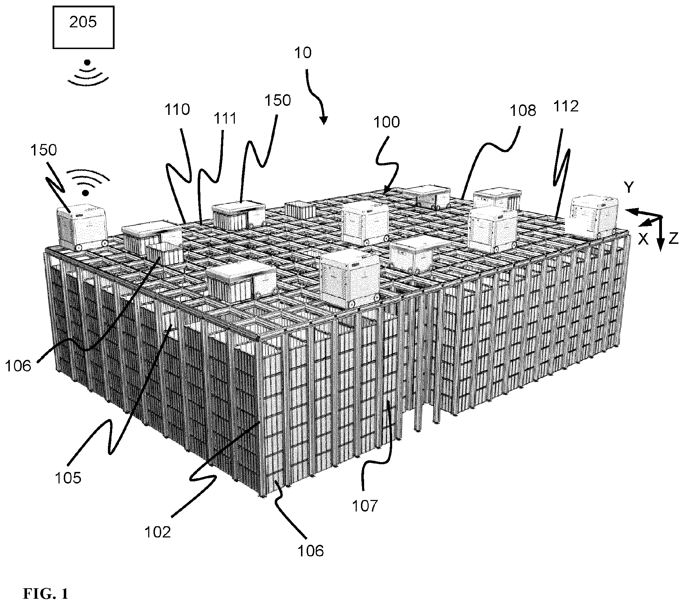

Figure 1 discloses a prior art automated storage and retrieval system 10 comprising a framework structure 100 and automated vehicles 150 handling storage containers 106 on such a system.

The framework structure 100 comprises upright members 102 and a storage volume comprising storage columns 105 arranged in rows between the upright members 102. In these storage columns 105, storage containers 106 also known as bins, are stacked one on top of one another to form stacks 107 running in the Z-direction as shown in the figure. The upright members 102 may typically be made of metal, e.g. extruded aluminium profiles.

The framework structure 100 of the automated storage and retrieval system 10 comprises a rail system 108 that is arranged across the top of the framework structure 100. The rail system 108 may also be arranged below the framework structure 100. The automated vehicles 150 are then able to handle storage container in storage columns 105 from different levels in the Z-direction where the rail system 108 is installed.

A plurality of automated vehicles 150 can be operated to raise or lower containers 106 into the storage columns 105, and to transport the storage containers 106 above and below the storage columns 105. The rail system 108 comprises a first set of parallel rails 110 arranged to guide movement of the automated vehicles 150 in a first direction X across the top of the frame structure 100, and a second set of parallel rails 111 arranged perpendicular to the first set of rails 110 to guide movement of the automated vehicles 150 in a second direction Y, which is perpendicular to the first direction *X.* Where rails running in the X-direction meet rails running in the *Y*-direction there will be rails crossings, where the automated vehicles 150 can change direction.

Storage containers 106 stored in the columns 105 are accessed by the automated vehicles 150 through access openings 112 in the rail system 108.

Each automated vehicle 150 comprises a vehicle body and first and second sets of wheels which enable the lateral movement of the automated vehicles 150 in the X direction and in the Y direction, respectively. The vehicle body further comprises a plurality of mechanical components and electronic parts, such as transmitter, receiver, sensors, and power supply enabling autonomous operation.

For monitoring and controlling the automated storage and retrieval system 10, the system comprises a system controller 205 with a database keeping track of the location of each storage container 106 as well as which storage container 106 to be handled at any time. The system controller 205 will thus at all time have an updated overview of positions and movements of all automated vehicles 150 operating on the rail system 108. This is used for controlling traffic flow of all the automated vehicles 150 by transmitting movement instructions from the system controller 205 to the automated vehicles 150 for transporting specific storage containers 106 from one location to another location without colliding.

In addition to movement information, communication between the system controller 205 and the automated vehicles 150 also comprises status information transmitted from the automated vehicles 150 to the system controller 205. The status information may comprise current position and battery level as well as relevant data generated by sensors comprised in the automated vehicles 150. All communications between the system controller 205 and the automated vehicles 150 are performed via a wireless network which is exposed to interference and time delays.

When several automated vehicles 150 shall move in the same direction, the system controller 205 can control each automated vehicle 150 such that they are lined up in a train configuration, i.e. a plurality of automated vehicles 150 that are proximately arranged in series and arranged to move as a group. The assembly of the train is accomplished with help of sensors comprised in the automated vehicles 150 or by the system controller's knowledge about the automated vehicles' 150 relative positions, or a combination of both. However, the position of an automated vehicle 150 on the rail system is not known with certainty until it has passed a rails crossing, after which the position of each automated vehicle 150 is transmitted to the system controller which processes this information. Updated position information may thus result in delays. In addition, further delays are expected, since position information is relayed through, and processed in the system controller 205. As a result, this may result in ineffective train driving for the automated vehicle 150.

WO 2022/106318 A1 describes a storage system, where the delay problem is avoided by letting a container handling vehicles drive in a "train" formation when in physical contact with each other. This is achieved by letting the last vehicle in the "train" drive a little faster than the vehicle in front thereby achieving physical contact.

The present solution provides an alternative way of driving automated vehicles as a group of vehicles driving in the same direction, i.e. driving in a "train" formation.

The solution is simple, efficient, and low cost and can easily be retrofitted and adapted to existing systems. In addition to addressing the mentioned delay problem, the solution requires less communication between a system controller and automated vehicles defined in a group driving in the same direction.

WO 2021/209337 A1 describes a container handling vehicle for operation on a two-dimensional rail system in which synchronized movement of a slave vehicle and a master vehicle may include a train-like synchronization where the slave vehicle follows behind the master vehicle, or the synchronized movement may include a parallel synchronization where the slave vehicle moves with the master vehicle side-by-side.

### Summary of the invention

The present invention is set forth and characterized in the independent claims, while the dependent claims describe other characteristics of the invention.

More specifically, the invention is defined by a method of controlling movements of a plurality of automated vehicles operating an automated storage and retrieval system comprising a framework structure and a rail system configured to guide a plurality of automated vehicles between storage columns made by upright members of the framework structure. The rail system can be installed on top of the framework structure, below the framework structure, or inside the framework structure.

The automated storage and retrieval system is controlled by a system controller, wherein each automated vehicle comprises a vehicle body, first and second sets of wheels enabling lateral movements of the automated vehicles in an X and Y direction on the rail system, components and parts connected to a local controller enabling autonomous operation, a communication means connected to the local controller for communicating with the system controller and receiving movements instructions from the system controller, and a short-range communication device configured to communicate signals with nearby automated vehicles. The short-range communication device can be any device adapted for short range communication, such as a communication device using light for communication, or other devices with low power output not interfering radio communication between the system controller and the automated vehicles.

The first step of the method is transmitting a control signal from the system controller to at least two identified automated vehicles to move as a group in same driving direction on the rail system, and transmitting a control signal from the system controller to a selected automated vehicle in the group to act as a guiding automated vehicle for other automated vehicles in the group and to drive to a target position. A guiding automated vehicle communicates and receives control instructions from the system controller, while other automated vehicles in a group are controlled by the guiding vehicle, thereby reducing communication between each vehicle in a group and the system controller.

According to one embodiment, the transmission of a control signal from the system controller to the automated vehicles to move as a group comprises activating the short-range devices of the automated vehicles in the group.

According to one embodiment, the short-range devices are using a light source for communication. The light source may be visible light or IR-light. The visible light can be provided by LED light source, while IR-light can be provided by an IR-source.

The short-range communication device can in one embodiment be connected to each of four sides, extending parallel to one of the X or Y directions, of the vehicle body of each automated vehicle.

The next step is transmitting a short-range signal, e.g. an IR-signal, from the selected guiding automated vehicle, signaling to other automated vehicles in the group to follow the guiding automated vehicle. This is thus a movement signal. The IR-signal can be transmitted from an IR-transmitter facing the opposite direction of the driving direction of the guiding container vehicle.

The next step is detecting the transmitted short-range signals by the automated vehicles in the group. When using IR-sensors connected on each side of the vehicle body, a transmitted IR-signal is detected by the IR-sensor facing the driving direction of an automated vehicle which is in the group and next to the guiding automated vehicle.

Detected short-range signals are relayed between the automated vehicles in the group. This means that detected signals are forwarded to the signal sources facing the opposite direction of the driving direction of the automated vehicle in the group.

The guiding automated vehicle will then drive to the target position while transmitting the movements signals from the short-range device, and letting the other automated vehicles in the group follow the movements of the guiding automated vehicle as long as the transmitted movements signals are detected.

According to one embodiment, distances between automated vehicles in the group are measured, and the automated vehicles are controlled to drive at a set distance from each other.

Signals transmitted from the guiding automated vehicle may further define a number of grid cell the automated vehicles shall move before they stop.

The position of each automated vehicle in the group is in one embodiment determined from the position of the guiding automated vehicle as determined by the system controller, and measured distances between each following automated vehicle.

**In** one embodiment, identifications of and distances between automated vehicles are transmitted to the guiding container vehicle for forwarding this information to the system controller.

According to another embodiment, the automated vehicles are controlled to be in physical contact with each other, and where contact is confirmed when change in applied drive force is detected.

In one embodiment of the method, several logical groups are defined, each comprising multiple automated vehicles and where each group are controlled to move in a defined direction. In this embodiment, transmitted short-range signals are unique for each logical group. One group comprising for instance seven automated vehicles are instructed to move eight grid cells in the X-direction, while another group comprising five container handling vehicles are instructed to move six grid cells in the Y-direction.

The invention is further defined by a computer program product, that when being executed in local controllers of automated vehicles of an automated storage and retrieval system performs the method described above for moving a group of automated vehicles along a rail system of the automated storage and retrieval system.

According to a second aspect, the invention is defined by an automated storage and retrieval system comprising a plurality of automated vehicles operable to handle storage containers on a rail system configured to guide a plurality of automated vehicles between storage columns made by upright members of the framework structure.

The automated storage and retrieval system is controlled by a system controller, wherein each automated vehicle comprises a vehicle body, first and second sets of wheels enabling lateral movement of the automated vehicles in an X and Y direction on the rail system, components and parts connected to a local controller enabling autonomous operation, a communication means connected to the local controller for communicating with the system controller and receiving movements instructions from the system controller, a short-range communication device is configured to communicate signals with nearby automated vehicles. The system controller is configured to transmit a control signal to at least two identified automated vehicles to move as a group in same driving direction on the rail system, transmit a control signal to a selected automated vehicle in the group to act as a guiding automated vehicle for other automated vehicles in the group and to drive to a target position.

The local controller is configured to control transmission of a short-range signal from the short-range communication device to the automated vehicles in the group to follow the selected guiding automated vehicle, detect the short-range signal transmitted by the automated vehicles in the group, relay detected short-range signals between automated vehicles in the group, drive the guiding automated vehicle to the target position while transmitting movements signals from the short-range communication device, and control the automated vehicles in the group to follow the movements of the guiding automated vehicle as long as the transmitted movements signals are detected.

According to one embodiment, the short-range communication device is a light source, e.g. LED-light or IR-light.

In one embodiment, the short-range communication device is connected on a top part of a vehicle body to have a view in X and Y directions.

In another embodiment, the short-range communication device is connected to each of four sides, extending parallel to one of the X or Y directions, of the vehicle body of each automated vehicle.

According to a third aspect, the invention is defined by a computer program product that when being executed in local controllers of automated vehicles of an automated storage and retrieval system performs the method according to the first aspect of the invention for moving a group of automated vehicles along a rail system of the automated storage and retrieval system (10).

### BRIEF DESCRIPTION OF THE DRAWINGS

The following drawings are appended to facilitate the understanding of the invention. The drawings show embodiments of the invention, which will now be described by way of example only, where:
Figure 1 is a perspective view of a framework structure of a prior art automated storage and retrieval system.
Figure 2 is a flowchart of a method for moving automated vehicles together as a group.
Figure 3 illustrates the principle of controlling and moving automated vehicles together as a group.
Figure 4 illustrates using IR-sensors as the light sources for controlling and moving automated vehicles together as a group.

### DETAILED DESCRIPTION OF THE INVENTION

In the following description, the invention will be explained in more detail by way of example only and with reference to the appended drawings. It should be understood, however, that the drawings are not intended to limit the invention to the subject-matter depicted in the drawings.

A typical prior art automated storage and retrieval system 10 with a framework structure 100 was described in the background section above with reference to Fig. 1.

The framework structure 100 can be of any size, and it is understood that it can be considerably wider and/or longer and/or deeper than the one disclosed in Fig. 1. For example, the framework structure 100 may have a horizontal extent of more than 700x700 storage columns 105 and a storage depth for storing more than eight stacked storage containers 106, and where storage containers 106 are handled by hundreds of automated vehicles 150 running on the rail system 108. The rail system may be installed on top of the framework structure 100 and/or in the middle of the framework structure 100, and/or below the framework structure 100. The automated vehicles will then be able to handle storage containers 106 in storage columns 105 from different positions in the Z-directions where the rail system is installed.

Also, the framework structure 100 can be considerably deeper than the one disclosed in fig. 1. For example, the framework structure 100 may be more than eight grid cells 122 deep, i.e. in the Z-direction indicated in Fig. 1.

For monitoring and controlling the automated storage and retrieval system 10, a system controller 205 with a database keeps track of the location of each storage container 106 as well as which storage container 106 to handle at any time. The system controller 205 further controls each automated vehicle 150 by transmitting control instructions and receiving confirmation signals. The system controller 105 sends control instructions to each automated vehicle 150 to move from one grid cell 122 to another.

For larger systems comprising hundreds or even thousands of automated vehicles 150, real-time communication between automated vehicles 150 and the system controller 205 can be quite extensive and subjected to interference and delays. The quality of wireless communication is restricted by available bandwidth.

When two automated vehicles 150 are standing next to each other and both want to move in the same direction, the first automated vehicle 150 will start moving, but the other automated vehicle 150 has to wait for some time before it can move into the grid cell 122 previously occupied by the first automated vehicle 150. The waiting time introduces delays that will increase for each additional automated vehicle 150 that are next to each other and wants to move in the same direction.

The present solution addresses this and reduces delays and use of bandwidth requirement when several automated vehicles 150 are controlled to drive in same direction across the rail system. These are assigned to be in a same group and one of the automated vehicles 150 in the group is chosen as a group leader and guiding automated vehicle 150 for the other automated vehicles 150. The group leader will communicate with the system controller 205, while the other automated vehicles in the group are guided and controlled by the group leader.

The automated vehicle 150 can be of any type operating on an automated storage and retrieval system 10, such as an automated vehicle retrieving a storage container 106 from a storage columns 105 and transporting it to a destination location, or picking up a storage container and placing it in a storage column 105.

The automated vehicle 150 can also be drone transporting storage containers 106 between storage columns 105, or a harvester picking items picking and placing items in storage container 106. It can further be a service vehicle configured to perform service on other types of automated vehicles 150.

The different types of automated vehicles 150 can run on rail systems 108 installed in different levels of an automated storage and retrieval system, e.g. on top of the framework structure 100, in the middle of the framework structure 100, or below the framework structure 100.

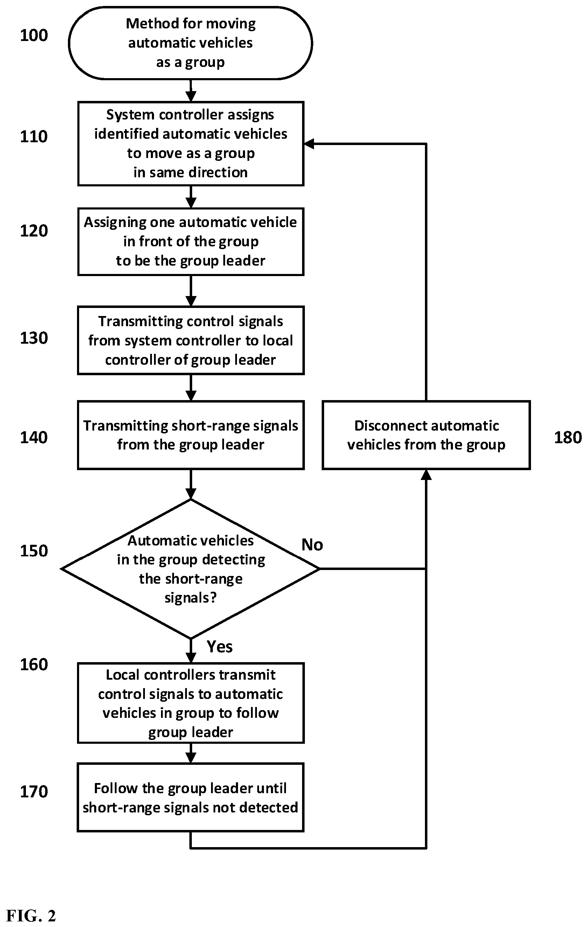

Figure 2 is a flowchart of a method for moving automated vehicles together as a group 100. The system controller has an overview of every automated vehicles and their positions when operating the automated storage and retrieval system 10. When it is determined that several automated vehicles 150 shall drive in the same direction, the system controller assigns 110 identified automated vehicles 150 to move as a group in the same direction across the rail system 108.

One of the automated vehicles 150 in the group is assigned 120 to be a group leader that the other automated vehicles 150 in the group shall follow. Control signals, controlling movements to a target position on the rail system 108, are then transmitted 130 from the system controller 205 to the group leader.

Short-range signals are then transmitted 140 from the group leader. Automated vehicles 150 close to the group leader detecting the short-range signals 150 will forward the detected short-range signals to other automated vehicles 150 in the group. All automated vehicles 150 in a group will then follow the group leader if the short-range signals are detected 170.

The signals transmitted from the group leader may define how many grid cells 122 the automated vehicles 150 in the train shall move. After moving the defined number of grid cells 122, the automated vehicles 150 will disconnect from the group leader, meaning that the system controller will take control of each automated vehicle 150.

The number of grid cells 122 to move can be addressed to specific automated vehicles in the train. The signals may for instance specify that the first five automated vehicles 150 after the group leader shall move eight grid cells 122, while the three last vehicles shall move five grid cells 122.

Alternatively, the transmitted signal may only indicate that the automated vehicles 150 shall follow the group leader when the signal is detected. The automated vehicles 150 will then stop following the group leader once the short-range signal is not detected. The automated vehicles will then stop on the closest grid cell 122, and the system controller 205 will take control of each automated vehicle 150.

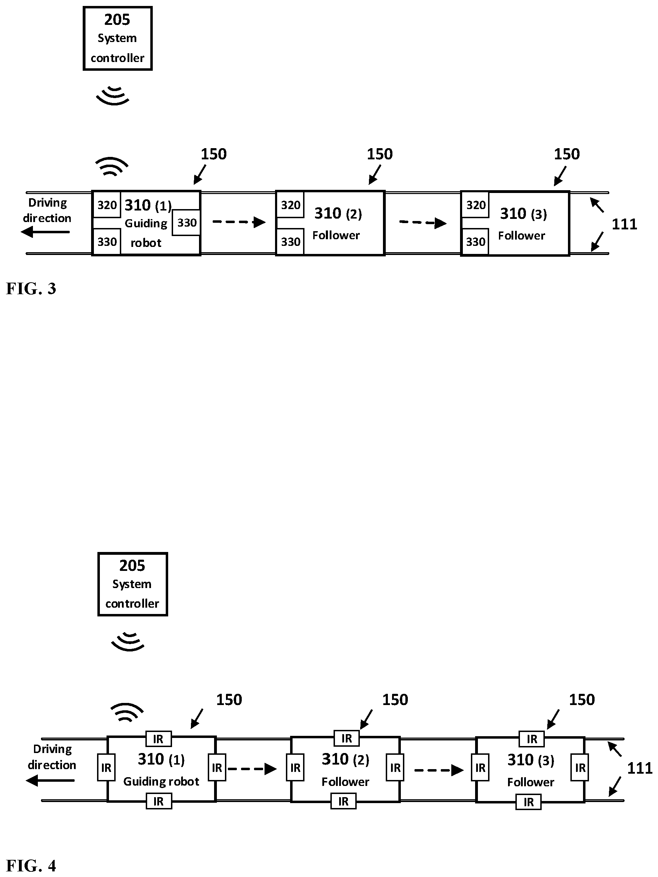

Figure 3 illustrates the principle of controlling automated vehicles to move together as a group. In this example, three automated vehicles 150 are aligned as a train running on the same parallel rails 111.

When it is decided that the three automated vehicles 150 shall move together as a group, the system controller 205 sends a control signal to the three automated vehicles 150 identified with first, second and third vehicles bodies 310 (1), (2), (3). Since vehicle body 310 (1) is the first automated vehicle 150 in the driving direction, the system controller selects vehicle body 310 (1) to act as a group leader and guiding automated vehicle 150 for the two other vehicles of the train.

A short-range signal is transmitted from the short-range communication device 330 of the selected guiding automated vehicle 150, signaling to the two other automated vehicles 150 in the group to follow the guiding automated vehicle 150.

The short-range signal is detected by the second automated vehicle 150 with vehicle body 310 (2) next to the guiding automated vehicle 150 with vehicle body 310 (1).

Once detected, the received short-range signal is re-transmitted from the short-range communication device 330 of the second automated vehicle 150. The re-transmitted signal is detected by the third automated vehicle 150.

The train with all three automated vehicles 150 starts moving when the guiding automated vehicle 150 receives instructions from the system controller to move to a target position and starts transmitting movements signals from the short-range device 330. The two other automated vehicles 150 in the group will follow the movements of the guiding vehicle if the movement signals are detected.

Figure 4 illustrates an embodiment of the solution, where IR-sensors, each comprising IR-transmitter and IR-receiver are used as the short-range device 330 for controlling automated vehicles 150 when moving together in a group. In the embodiment illustrated in this example, IR-sensors are connected to each of four sides of the vehicle body 310 of each automated vehicle 150. The IR-sensors may be connected to the outside of a vehicle body 310 or on the inside of a vehicle body 310. In this case, a sensor element may have a field of view through a small hole in the vehicle body 310.

For additional protection of the IR-sensor, the hole can be closed with a lid when the IR-sensor is inactive and open when the IR-sensor is active. Alternatively, an IR-sensor can be installed on top of an automated vehicle 150 having sensor zones perpendicular to the sides of a vehicle body 310, thereby pointing in X and Y directions.

The directivity of a light source such as LED-light or IR-light can be controlled by enclosing the source in a screen and using lenses for focusing the light.

The first steps of the method of this example are the same as for the basic principle described above with reference to fig. 3. The three automated vehicles 150 with vehicles bodies 310 (1), (2), (3) are selected and assigned, by the system controller 205, to move together as a group in the same driving direction. If they are not already lined up on the same parallel rails 111, they are controlled to move from their current position to line up one after the other making a train configuration.

The IR-sensors connected to the automated vehicles 150 can stay active when the automated vehicles 150 are active, or the IR-sensors can be activated once automated vehicles 150 are assigned to move together as a group.

When the automated vehicles 150 assigned in the same group are lined up, the system controller 205 selects an automatic vehicle 150 in the group to act as a group leader. This will be the first automated vehicle 150 in a driving direction. The group leader will act as a guiding automated vehicle 150 which will receive instructions from the system controller 205 to drive to a target position on the rail system 108.

The target position will determine the driving direction for all automated vehicles 150 in the group.

Once the guiding automated vehicle 150 has received instructions to move to a target destination, its IR-transmitter having a detection zone in a direction opposite of the driving direction will transmit a "follow me" signal. In its simplest form, this can be to transmit IR-light either continuous, or as a blinking pattern. The transmitted IR-light is detected by the IR-sensor having a field of view at the guiding automated vehicle 150, i.e. the IR-sensor of the second automated vehicle 150 in the train configuration directed at the guiding automated vehicle 150. The detected "follow me" IR-signal is relayed to the IR-sensor pointing in the opposite direction of the driving direction of the second automated vehicle 150. The "follow-me" IR-signal is relayed from one automated vehicle 150 in the group to the following automated vehicle 150.

All the automated vehicles 150 in the group will follow the movements of the guiding automated vehicle 150 if the "follow me" IR-signal is detected. In this way all automated vehicles defined in same group will follow the guiding automated vehicle 150 driving in front of the train. Once the guiding automated vehicle 150 has reached its destination, it will stop transmission of the "follow me" IR-signal. The following automated vehicles 150 are then disconnected from the group, and the system controller 205 will take over control of these automated vehicles 150.

The IR-sensors can also be used to measure distance between two automated vehicles 150. IR-light that is transmitted from one automated vehicle 150 and reflected in another can be detected and distances can be estimated based on the time-of-flight principle. Additional sensors can also be used for more accurate measurements of distances.

Distance measurements can be used to control distances to be held between automated vehicles 150 when driving in a train configuration. Distance measurements can also be used for determining positions of automated vehicles 150 following a guiding automated vehicle 150 based on its current known position.

The IR-sensor can further be used for transferring information between automated vehicles 150 driving in train formation in same group. In this embodiment, identifications of and distances between automated vehicles are transmitted to the guiding container vehicle which can forward this information to the system controller.

The solution disclosed herein provides a simple and efficient way of driving several automated vehicles as a group in a train configuration. Short-range sensors, such as IR-sensors can be retrofitted and adapted to existing systems. Communication to and from the system controller 205 is reduced and delays that may occur, if the system controller 205 controls each automated vehicle 150 to move in a same direction, are avoided.

## Claims

1. A method of controlling movements of a plurality of automated vehicles (150) operating an automated storage and retrieval system (10) comprising a framework structure (100) and a rail system (108) configured to guide a plurality of automated vehicles (150) between storage columns (105) made by upright members (102) of the framework structure (100), the automated storage and retrieval system (10) is controlled by a system controller (205), wherein each automated vehicle (150) comprises a vehicle body (310), first and second sets of wheels enabling lateral movement of the automated vehicles (150) in an X and Y direction on the rail system (108), components and parts connected to a local controller (320) enabling autonomous operation, a communication means connected to the local controller (320) for communicating with the system controller (205) and receiving movements instructions from the system controller (205), and a short-range communication device (330) configured to communicate signals with nearby automated vehicles (150), and where the following steps are performed:
- transmitting a control signal from the system controller (205) to at least two identified automated vehicles (150) to move as a group in same driving direction on the rail system (108),
- transmitting a control signal from the system controller (205) to a selected automated vehicle (150) in the group to act as a guiding automated vehicle (150) for other automated vehicles (150) in the group and to drive to a target position,
- transmitting a short-range signal from the selected guiding automated vehicle (150) wherein the short-range signal is a light signal from a light source facing the opposite direction of the driving direction from the guiding automated vehicle, signaling to other automated vehicles (150) in the group to follow the guiding automated vehicle (150),
- detecting the transmitted short-range signal by the automated vehicles (150) in the group by a light sensor facing the driving direction of an automated vehicle (150) in the group next to the guiding automated vehicle (150),
- relaying detected short-range signals between the automated vehicles (150) in the group wherein the relaying comprises forwarding the detected light signal to the light source facing the opposite direction of the driving direction of the automated vehicle (150), and repeating detection and forwarding of the light signals to and from following automated vehicles (150) in the group,
- driving the guiding automated vehicle (150) to the target position while transmitting movements signals from the short-range device (330) and let the other automated vehicles (150) in the group follow the movements of the guiding automated vehicle (150) as long as the transmitted movements signals are detected.

2. The method according to claim 1, where transmission of a control signal from the system controller (205) to the automated vehicles (150) to move as a group comprises activating the short-range communication devices (330) of the automated vehicles (150) in the group.

3. The method according to claim 1 or 2, comprising using LED-light or IR-light as the light source.

4. The method according to any of the previous claims, comprising connecting a short-range communication device (330) to each of four sides, extending parallel to one of the X or Y directions, of the vehicle body (310) of each automated vehicle (150).

5. The method according to any of the previous claims, comprising aligning the automated vehicles (150) in the group such that they are arranged as a train running on the same pair of tracks after each other with the guiding automated vehicle (150) in front.

6. The method according to any preceding claim, comprising measuring distance between automated vehicles (150) in the group and controlling the automated vehicles (150) to drive at a set distance from each other.

7. The method according to any preceding claim, comprising transmitting light-signals defining number of grid cells (122) to move for each automated vehicle (150) in the group.

8. The method according to any of the claims 5 to 7, comprising controlling the automated vehicles (150) to be in physical contact with each other, and where contact is confirmed when change in applied drive force is detected.

9. The method according to claim 6 or 7, where the position of each automated vehicle (150) in the group is determined from the position of the guiding automated vehicle (150) as determined by the system controller (205), and measured distances between each following automated vehicle (150), and optionally
where identifications and distances between automated vehicles (150) are transmitted to the guiding automated vehicle (150) for forwarding this information to the system controller (205).

10. The method according to any of the previous claims, comprising defining several logical groups each comprising multiple automated vehicles (150) and directing each group to move in a defined direction, and optionally
transmitting short-range signals that are unique for each logical group.

11. An automated storage and retrieval system (10) comprising a plurality of automated vehicles (150) operable to handle storage containers (106) on a rail system (108) configured to guide a plurality of automated vehicles (150) between storage columns (105) made by upright members (102) of the framework structure (100), the automated storage and retrieval system (10) is controlled by a system controller (205), wherein each automated vehicle (150) comprises a vehicle body (310), first and second sets of wheels enabling lateral movement of the automated vehicles (150) in an X and Y direction on the rail system (108), components and parts connected to a local controller (320) enabling autonomous operation, a communication means connected to the local controller (320) for communicating with the system controller (205) and receiving movements instructions from the system controller (205), and where a short-range communication device (330) is configured to communicate signals with nearby automated vehicles (150), where the system controller is configured to:
- transmit a control signal to at least two identified automated vehicles (150) to move as a group in same driving direction on the rail system (108),
- transmit a control signal to a selected automated vehicle (150) in the group to act as a guiding automated vehicle (150) for other automated vehicles (150) in the group and to drive to a target position, and where the local controller is configured to:
- control transmission of a short-range signal from the short-range communication device (330) to the automated vehicles (150) in the group to follow the selected guiding automated vehicle (150) wherein the short-range signal is a light signal from a light source facing the opposite direction of the driving direction from the guiding automated vehicle,
- detect the short-range signal transmitted by the automated vehicles (150) in the group by a light sensor facing the driving direction of an automated vehicle (150) in the group next to the guiding automated vehicle (150),
- relay detected short-range signals between automated vehicles (150) wherein the relaying comprises forwarding the detected light signal to the light source facing the opposite direction of the driving direction of the automated vehicle (150), and repeating detection and forwarding of the light signals to and from following automated vehicles (150) in the group,
- drive the guiding automated vehicle (150) to the target position while transmitting movements signals from the short-range communication device (330), and
- control the automated vehicles (150) in the group to follow the movements of the guiding automated vehicle (150) as long as the transmitted movements signals are detected.

12. The automated storage and retrieval system (10) according to claim 11, where the light source is LED-light or IR-light.

13. The automated storage and retrieval system (10) according to any of the claims 11 to 12, where the short-range communication device (330) is connected on a top part of a vehicle body (310) to have a view in X and Y directions.

14. The automated storage and retrieval system (10) according to any of the claims 11 to 12, where the short-range communication device (330) is connected to each of four sides, extending parallel to one of the X or Y directions, of the vehicle body (310) of each automated vehicle (150).

15. A computer program product, that when being executed by a system controller (205) of an automated storage and retrieval system (10) performs the method according to claims 1 to 10 for moving a group of automated vehicles (150) along a rail system of the automated storage and retrieval system (10).

## Patentansprüche

1. Verfahren zum Steuern von Bewegungen mehrerer automatisierter Fahrzeuge (150), die in einem automatisierten Lager- und Entnahmesystem (10) betrieben werden, das eine Rahmenstruktur (100) und ein Schienensystem (108) umfasst, das dazu ausgelegt ist, mehrere automatisierte Fahrzeuge (150) zwischen Lagersäulen (105) zu führen, die durch aufrechte Elemente (102) der Rahmenstruktur (100) gebildet sind, wobei das automatisierte Lager- und Entnahmesystem (10) durch eine Systemsteuerung (205) gesteuert wird, wobei jedes automatisierte Fahrzeug (150) eine Fahrzeugkarosserie (310), einen ersten und einen zweiten Satz von Rädern, die eine laterale Bewegung der automatisierten Fahrzeuge (150) in einer X- und Y-Richtung auf dem Schienensystem (108) ermöglichen, Komponenten und Teile, die mit einer lokalen Steuerung (320) verbunden sind, die einen autonomen Betrieb ermöglicht, ein mit der lokalen Steuerung (320) verbundenes Kommunikationsmittel zum Kommunizieren mit der Systemsteuerung (205) und Empfangen von Bewegungsanweisungen von der Systemsteuerung (205) und eine Kurzstreckenkommunikationsvorrichtung (330), die dazu ausgelegt ist, Signale mit in der Nähe befindlichen automatisierten Fahrzeugen (150) zu kommunizieren, umfasst, und wobei die folgenden Schritte durchgeführt werden:
- Übertragen eines Steuersignals von der Systemsteuerung (205) an mindestens zwei identifizierte automatisierte Fahrzeuge (150), so dass sie sich als eine Gruppe in derselben Fahrtrichtung auf dem Schienensystem (108) bewegen,
- Übertragen eines Steuersignals von der Systemsteuerung (205) an ein ausgewähltes automatisiertes Fahrzeug (150) in der Gruppe, so dass es als ein führendes automatisiertes Fahrzeug (150) für andere automatisierte Fahrzeuge (150) in der Gruppe dient und zu einer Zielposition fährt,
- Übertragen eines Kurzstreckensignals von dem ausgewählten führenden automatisierten Fahrzeug (150), wobei das Kurzstreckensignal ein Lichtsignal von einer Lichtquelle ist, die in die der Fahrtrichtung von dem führenden automatisierten Fahrzeug entgegengesetzte Richtung weist, das anderen automatisierten Fahrzeugen (150) in der Gruppe signalisiert, dem führenden automatisierten Fahrzeug (150) zu folgen,
- Detektieren des übertragenen Kurzstreckensignals durch die automatisierten Fahrzeuge (150) in der Gruppe durch einen Lichtsensor, der in die Fahrtrichtung eines automatisierten Fahrzeugs (150) in der Gruppe neben dem führenden automatisierten Fahrzeug (150) weist,
- Übermitteln detektierter Kurzstreckensignale zwischen den automatisierten Fahrzeugen (150) in der Gruppe, wobei das Übermitteln Weiterleiten des detektierten Lichtsignals zu der Lichtquelle, die in die der Fahrtrichtung des automatisierten Fahrzeugs (150) entgegengesetzte Richtung weist, und Wiederholen der Detektion und Weiterleitung der Lichtsignale zu und von nachfolgenden automatisierten Fahrzeugen (150) in der Gruppe umfasst,
- Fahren des führenden automatisierten Fahrzeugs (150) zu der Zielposition während eines Übertragens von Bewegungssignalen von der Kurzstreckenvorrichtung (330) und Veranlassen der anderen automatisierten Fahrzeuge (150) in der Gruppe, den Bewegungen des führenden automatisierten Fahrzeugs (150) zu folgen, solange die übertragenen Bewegungssignale detektiert werden.

2. Verfahren nach Anspruch 1, wobei das Übertragen eines Steuersignals von der Systemsteuerung (205) an die automatisierten Fahrzeuge (150), so dass sie sich als eine Gruppe bewegen, Aktivieren der Kurzstreckenkommunikationsvorrichtungen (330) der automatisierten Fahrzeuge (150) in der Gruppe umfasst.

3. Verfahren nach Anspruch 1 oder 2, umfassend Verwenden von LED-Licht oder IR-Licht als Lichtquelle.

4. Verfahren nach einem der vorhergehenden Ansprüche, umfassend Verbinden einer Kurzstreckenkommunikationsvorrichtung (330) mit jeder von vier sich parallel zu einer der X- oder Y-Richtung erstreckenden Seiten der Fahrzeugkarosserie (310) jedes automatisierten Fahrzeugs (150).

5. Verfahren nach einem der vorhergehenden Ansprüche, umfassend Ausrichten der automatisierten Fahrzeuge (150) in der Gruppe so, dass sie als ein Zug angeordnet sind, wobei sie auf demselben Paar von Gleisen nacheinander mit dem führenden automatisierten Fahrzeug (150) vorneweg fahren.

6. Verfahren nach einem der vorhergehenden Ansprüche, umfassend Messen eines Abstands zwischen automatisierten Fahrzeugen (150) in der Gruppe und Steuern der automatisierten Fahrzeuge (150) so, dass sie in einem festgelegten Abstand voneinander fahren.

7. Verfahren nach einem der vorhergehenden Ansprüche, umfassend Übertragen von Lichtsignalen, die eine Anzahl von Gitterzellen (122) definieren, über die sich jedes automatisierte Fahrzeug (150) in der Gruppe bewegen soll.

8. Verfahren nach einem der Ansprüche 5 bis 7, umfassend Steuern der automatisierten Fahrzeuge (150) so, dass sie sich in physischem Kontakt miteinander befinden, und wobei ein Kontakt bestätigt wird, wenn eine Änderung einer aufgebrachten Antriebskraft detektiert wird.

9. Verfahren nach Anspruch 6 oder 7, wobei die Position jedes automatisierten Fahrzeugs (150) in der Gruppe aus der Position des führenden automatisierten Fahrzeugs (150), wie durch die Systemsteuerung (205) bestimmt, und gemessenen Abständen zwischen jedem nachfolgenden automatisierten Fahrzeug (150) bestimmt wird, und optional
wobei Identifikationen und Abstände zwischen automatisierten Fahrzeugen (150) an das führende automatisierte Fahrzeug (150) zum Weiterleiten dieser Informationen an die Systemsteuerung (205) übertragen werden.

10. Verfahren nach einem der vorhergehenden Ansprüche, umfassend Definieren mehrerer logischer Gruppen, die jeweils mehrere automatisierte Fahrzeuge (150) umfassen, und Anweisen jeder Gruppe, sich in eine definierte Richtung zu bewegen, und optional
Übertragen von Kurzstreckensignalen, die für jede logische Gruppe eindeutig sind.

11. Automatisiertes Lager- und Entnahmesystem (10), das mehrere automatisierte Fahrzeuge (150) umfasst, die betreibbar sind, um Lagerbehälter (106) auf einem Schienensystem (108) zu handhaben, das dazu ausgelegt ist, mehrere automatisierte Fahrzeuge (150) zwischen Lagersäulen (105) zu führen, die durch aufrechte Elemente (102) der Rahmenstruktur (100) gebildet sind, wobei das automatisierte Lager- und Entnahmesystem (10) durch eine Systemsteuerung (205) gesteuert wird, wobei jedes automatisierte Fahrzeug (150) eine Fahrzeugkarosserie (310), einen ersten und einen zweiten Satz von Rädern, die eine laterale Bewegung der automatisierten Fahrzeuge (150) in einer X- und Y-Richtung auf dem Schienensystem (108) ermöglichen, Komponenten und Teile, die mit einer lokalen Steuerung (320) verbunden sind, die einen autonomen Betrieb ermöglicht, ein mit der lokalen Steuerung (320) verbundenes Kommunikationsmittel zum Kommunizieren mit der Systemsteuerung (205) und Empfangen von Bewegungsanweisungen von der Systemsteuerung (205) umfasst, und wobei eine Kurzstreckenkommunikationsvorrichtung (330) dazu ausgelegt ist, Signale mit in der Nähe befindlichen automatisierten Fahrzeugen (150) zu kommunizieren, wobei die Systemsteuerung zu Folgendem ausgelegt ist:
- Übertragen eines Steuersignals an mindestens zwei identifizierte automatisierte Fahrzeuge (150), so dass sie sich als eine Gruppe in derselben Fahrtrichtung auf dem Schienensystem (108) bewegen,
- Übertragen eines Steuersignals an ein ausgewähltes automatisiertes Fahrzeug (150) in der Gruppe, so dass es als ein führendes automatisiertes Fahrzeug (150) für andere automatisierte Fahrzeuge (150) in der Gruppe dient und zu einer Zielposition fährt, und wobei die lokale Steuerung zu Folgendem ausgelegt ist:
- Steuern einer Übertragung eines Kurzstreckensignals von der Kurzstreckenkommunikationsvorrichtung (330) an die automatisierten Fahrzeugen (150) in der Gruppe, so dass sie dem ausgewählten führenden automatisierten Fahrzeug (150) folgen, wobei das Kurzstreckensignal ein Lichtsignal von einer Lichtquelle ist, die in die der Fahrtrichtung von dem führenden automatisierten Fahrzeug entgegengesetzte Richtung weist,
- Detektieren des übertragenen Kurzstreckensignals durch die automatisierten Fahrzeuge (150) in der Gruppe durch einen Lichtsensor, der in die Fahrtrichtung eines automatisierten Fahrzeugs (150) in der Gruppe neben dem führenden automatisierten Fahrzeug (150) weist,
- Übermitteln detektierter Kurzstreckensignale zwischen automatisierten Fahrzeugen (150), wobei das Übermitteln Weiterleiten des detektierten Lichtsignals zu der Lichtquelle, die in die der Fahrtrichtung des automatisierten Fahrzeugs (150) entgegengesetzte Richtung weist, und Wiederholen der Detektion und Weiterleitung der Lichtsignale zu und von nachfolgenden automatisierten Fahrzeugen (150) in der Gruppe umfasst,
- Fahren des führenden automatisierten Fahrzeugs (150) zu der Zielposition während eines Übertragens von Bewegungssignalen von der Kurzstreckenkommunikationsvorrichtung (330), und
- Steuern der automatisierten Fahrzeuge (150) in der Gruppe so, dass sie den Bewegungen des führenden automatisierten Fahrzeugs (150) folgen, solange die übertragenen Bewegungssignale detektiert werden.

12. Automatisiertes Lager- und Entnahmesystem (10) nach Anspruch 11, wobei die Lichtquelle LED-Licht oder IR-Licht ist.

13. Automatisiertes Lager- und Entnahmesystem (10) nach einem der Ansprüche 11 bis 12, wobei die Kurzstreckenkommunikationsvorrichtung (330) an einem oberen Teil einer Fahrzeugkarosserie (310) so verbunden ist, dass sie eine Sicht in X- und Y-Richtung hat.

14. Automatisiertes Lager- und Entnahmesystem (10) nach einem der Ansprüche 11 bis 12, wobei die Kurzstreckenkommunikationsvorrichtung (330) mit jeder von vier sich parallel zu einer der X- oder Y-Richtung erstreckenden Seiten der Fahrzeugkarosserie (310) jedes automatisierten Fahrzeugs (150) verbunden ist.

15. Computerprogrammprodukt, das, wenn es durch eine Systemsteuerung (205) eines automatisierten Lager- und Entnahmesystems (10) ausgeführt wird, das Verfahren nach den Ansprüchen 1 bis 10 zum Bewegen einer Gruppe von automatisierten Fahrzeugen (150) entlang eines Schienensystems des automatisierten Lager- und Entnahmesystems (10) durchführt.

## Revendications

1. Procédé de commande de déplacement d'une pluralité de véhicules automatisés (150) faisant fonctionner un système automatisé de stockage et de récupération (10) comprenant une structure de cadre (100) et un système de rails (108) configuré pour guider une pluralité de véhicules automatisés (150) entre des colonnes de stockage (105) constituées de montants (102) de la structure de cadre (100), le système automatisé de stockage et de récupération (10) étant commandé par un contrôleur de système (205), chaque véhicule automatisé (150) comprenant une carrosserie (310), des premier et second jeux de roues permettant un déplacement latéral des véhicules automatisés (150) dans une direction X et Y sur le système de rails (108), des composants et des pièces connectés à un contrôleur local (320) permettant un fonctionnement autonome, un moyen de communication connecté au contrôleur local (320) pour communiquer avec le contrôleur de système (205) et recevoir des instructions de déplacement du contrôleur de système (205), et un dispositif de communication à courte portée (330) configuré pour communiquer des signaux avec des véhicules automatisés (150) à proximité, et comprenant les étapes suivantes :
- l'émission d'un signal de commande depuis le contrôleur de système (205) à destination d'au moins deux véhicules automatisés (150) identifiés pour se déplacer en groupe dans la même direction de conduite sur le système de rails (108),
- l'émission d'un signal de commande depuis le contrôleur de système (205) à destination d'un véhicule automatisé (150) sélectionné du groupe pour assurer la fonction de véhicule automatisé de guidage (150) pour d'autres véhicules automatisés (150) du groupe et conduire jusqu'à une position cible,
- l'émission d'un signal à courte portée du véhicule automatisé de guidage (150) sélectionné, le signal à courte portée étant un signal lumineux d'une source de lumière tournée dans le sens opposé à la direction de conduite du véhicule automatisé de guidage, signalant aux autres véhicules automatisés (150) du groupe de suivre le véhicule automatisé de guidage (150),
- la détection du signal à courte portée émis par les véhicules automatisés (150) du groupe par un capteur de lumière tourné face à la direction de conduite d'un véhicule automatisé (150) du groupe à côté du véhicule automatisé de guidage (150),
- le relais de signaux à courte portée détectés entre les véhicules automatisés (150) du groupe, le relais comprenant le transfert du signal lumineux détecté à la source de lumière tournée dans le sens opposé à la direction de conduite du véhicule automatisé (150), et la répétition de la détection et du transfert des signaux lumineux vers et depuis les véhicules automatisés (150) suivants du groupe,
- la conduite du véhicule automatisé de guidage (150) jusqu'à la position cible en émettant des signaux de déplacement du dispositif à courte portée (330) et l'autorisation donnée aux autres véhicules automatisés (150) du groupe de suivre les déplacements du véhicule automatisé de guidage (150) tant que les signaux de déplacement émis sont détectés.

2. Procédé selon la revendication 1, dans lequel l'émission d'un signal de commande du contrôleur de système (205) à destination des véhicules automatisés (150) pour se déplacer en groupe comprend l'activation des dispositifs de communication à courte portée (330) des véhicules automatisés (150) du groupe.

3. Procédé selon la revendication 1 ou 2, comprenant l'utilisation d'une lumière DEL ou d'une lumière IR comme source de lumière.

4. Procédé selon l'une quelconque des revendications précédentes, comprenant la connexion d'un dispositif de communication à courte portée (330) à chacun des quatre côtés, s'étendant parallèlement à l'une des directions X ou Y, de la carrosserie (310) de chaque véhicule automatisé (150).

5. Procédé selon l'une quelconque des revendications précédentes, comprenant l'alignement des véhicules automatisés (150) du groupe de telle sorte qu'ils sont agencés en un train roulant sur la même paire de voies l'un après l'autre avec le véhicule automatisé de guidage (150) à l'avant.

6. Procédé selon l'une quelconque des revendications précédentes, comprenant la mesure de la distance entre des véhicules automatisés (150) du groupe et la commande des véhicules automatisés (150) pour une conduite à une distance définie les uns des autres.

7. Procédé selon l'une quelconque des revendications précédentes, comprenant l'émission de signaux lumineux définissant un nombre de cellules de grille (122) à déplacer pour chaque véhicule automatisé (150) du groupe.

8. Procédé selon l'une quelconque des revendications 5 à 7, comprenant la commande des véhicules automatisés (150) pour qu'ils soient en contact physique les uns avec les autres, et dans lequel le contact est confirmé lorsqu'une modification de la force motrice appliquée est détectée.

9. Procédé selon la revendication 6 ou 7, dans lequel la position de chaque véhicule automatisé (150) dans le groupe est déterminée à partir de la position du véhicule automatisé de guidage (150) telle que déterminée par le contrôleur de système (205), et des distances mesurées entre chaque véhicule automatisé suivant (150), et facultativement
dans lequel les identifications et les distances entre les véhicules automatisés (150) sont transmises au véhicule automatisé de guidage (150) pour transférer ces informations au contrôleur de système (205).

10. Procédé selon l'une quelconque des revendications précédentes, comprenant la définition de plusieurs groupes logiques comprenant chacun plusieurs véhicules automatisés (150) et l'orientation de chaque groupe pour qu'il se déplace dans une direction définie, et facultativement
l'émission de signaux à courte portée uniques pour chaque groupe logique.

11. Système automatisé de stockage et de récupération (10) comprenant une pluralité de véhicules automatisés (150) pouvant fonctionner pour gérer des conteneurs de stockage (106) sur un système de rails (108) configuré pour guider une pluralité de véhicules automatisés (150) entre des colonnes de stockage (105) constituées de montants (102) de la structure de cadre (100), le système automatisé de stockage et de récupération (10) étant commandé par un contrôleur de système (205), chaque véhicule automatisé (150) comprenant une carrosserie (310), des premier et second jeux de roues permettant un déplacement latéral des véhicules automatisés (150) dans une direction X et Y sur le système de rails (108), des composants et des pièces connectés à un contrôleur local (320) permettant un fonctionnement autonome, un moyen de communication connecté au contrôleur local (320) pour communiquer avec le contrôleur de système (205) et recevoir des instructions de déplacement du contrôleur de système (205), et dans lequel un dispositif de communication à courte portée (330) est configuré pour communiquer des signaux avec des véhicules automatisés (150) à proximité, le contrôleur de système étant configuré pour :
- émettre un signal de commande à destination d'au moins deux véhicules automatisés (150) identifiés pour se déplacer en groupe dans la même direction de conduite sur le système de rails (108),
- émettre un signal de commande à destination d'un véhicule automatisé (150) sélectionné du groupe pour assurer la fonction de véhicule automatisé de guidage (150) pour d'autres véhicules automatisés (150) du groupe et conduire jusqu'à une position cible, et le contrôleur local étant configuré pour :
- commander l'émission d'un signal à courte portée depuis le dispositif de communication à courte portée (330) à destination des véhicules automatisés (150) du groupe pour suivre le véhicule automatisé de guidage (150) sélectionné, dans lequel le signal à courte portée est un signal lumineux provenant d'une source de lumière tournée dans le sens opposé à la direction de conduite du véhicule automatisé de guidage,
- détecter le signal à courte distance émis par les véhicules automatisés (150) du groupe par un capteur de lumière tourné face à la direction de conduite d'un véhicule automatisé (150) du groupe à côté du véhicule automatisé de guidage (150),
- relayer des signaux à courte portée détectés entre les véhicules automatisés (150), le relais comprenant le transfert du signal lumineux détecté à la source lumineuse tournée dans le sens opposé à la direction de conduite du véhicule automatisé (150), et la répétition de la détection et du transfert des signaux lumineux vers et depuis les véhicules automatisés (150) suivants du groupe,
- conduire le véhicule automatisé de guidage (150) jusqu'à la position cible en émettant des signaux de déplacement du dispositif de communication à faible portée (330), et
- commander les véhicules automatisés (150) du groupe pour suivre les déplacements du véhicule automatisé de guidage (150) tant que les signaux de déplacement émis sont détectés.

12. Système automatisé de stockage et de récupération (10) selon la revendication 11, dans lequel la source de lumière est une lumière DEL ou une lumière IR.

13. Système automatisé de stockage et de récupération (10) selon l'une quelconque des revendications 11 à 12, dans lequel le dispositif de communication à courte portée (330) est connecté sur une partie supérieure d'une carrosserie (310) pour disposer d'une vue dans les directions X et Y.

14. Système automatisé de stockage et de récupération (10) selon l'une quelconque des revendications 11 à 12, dans lequel le dispositif de communication à courte portée (330) est connecté à chacun des quatre côtés, s'étendant parallèlement à l'une des directions X ou Y, de la carrosserie (310) de chaque véhicule automatisé (150).

15. Produit de programme informatique, qui, lorsqu'il est exécuté par un contrôleur de système (205) d'un système automatisé de stockage et de récupération (10), exécute le procédé selon les revendications 1 à 10 pour déplacer un groupe de véhicules automatisés (150) le long d'un système de rails du système automatisé de stockage et de récupération (10).
